# EUROPEAN PATENT APPLICATION

(11) **EP 4 852 295 A1**
(43) Date of publication of application: **09.12.2026**
(21) Application number: 24921984.1
(22) Date of filing: 28.11.2024
(51) Int. Cl.: H02M 7/48, B60L 53/24, B60L 58/18, B60L 58/27, H01M 10/44, H01M 10/48, H01M 10/615, H01M 10/625, H01M 10/633, H01M 10/637, H01M 10/667, H02J 7/00, H02M 3/155

(54) **ELECTRIC CIRCUIT AND PROGRAM FOR BATTERY TEMPERATURE RISE PROCESSING**

(30) Priority: 30.01.2024 JP 2024011937
(71) Applicant: TOYOTA JIDOSHA KABUSHIKI KAISHA, Toyota-Shi, Aichi-Ken 471-8571 (JP); DENSO Corporation, Kariya-shi, Aichi 448-8661 (JP)
(72) Inventor: SHIMO Yuichi, Toyota-shi, Aichi 471-8571 (JP); SUGIMOTO Kazuhiro, Toyota-shi, Aichi 471-8571 (JP); AOYAGI Shinsuke, Toyota-shi, Aichi 471-8571 (JP); SASAMA Yuta, Kariya-shi, Aichi 448-8661 (JP); OMATA Ryuji, Kariya-shi, Aichi 448-8661 (JP); TOYAMA Keisuke, Kariya-shi, Aichi 448-8661 (JP); KURACHI Taisuke, Kariya-shi, Aichi 448-8661 (JP); MIYOSHI Fumiyasu, Kariya-shi, Aichi 448-8661 (JP)
(74) Representative: Cabinet Beau de Loménie
(86) International application number: PCT/JP2024/042172
(87) International publication number: WO 2025/164066

(57) **Abstract**

In an electric circuit in which electric power is transferred while bucking a voltage in a specific power transfer direction, a battery warming process is executed. The electric circuit includes a first battery, a second battery, a three phase motor, an inverter circuit, and a control circuit. The battery warming process includes: a voltage difference adjustment process of adjusting a voltage difference obtained by subtracting an output voltage of the second battery from an output voltage of the first battery such that the voltage difference is equal to or greater than a reference value; and a periodic power transfer process of causing a converter circuit to alternately and repeatedly execute a first power transfer process and a second power transfer process, in which the converter circuit is composed of the inverter circuit and coils of the three phase motor, the converter circuit transfers electric power from the second battery to the first battery while boosting a voltage in the first power transfer process, and the converter circuit transfers electric power from the first battery to the second battery while bucking a voltage in the second power transfer process. An amplitude of the voltage difference in the periodic power transfer process is smaller than the reference value.

## Description

### Technical Field

### (Cross-Reference to Related Applications)

This application claims priority to Japanese Patent Application No. 2024-011937 filed on January 30, 2024, the entire contents of which are hereby incorporated by reference into the present application.

The present invention relates to an electric circuit and a program for a battery warming process.

### Background Art

Japanese Patent Application Publication No. 2020-120566 discloses an electric circuit mounted on a vehicle. This electric circuit has a series circuit of two batteries, an inverter circuit, and a three phase motor. The inverter circuit drives the three phase motor by converting DC power supplied from the series circuit of the batteries into AC power and supplying it to the three phase motor. This electric circuit also has wiring connecting a connection point of the two batteries and a neutral point of respective coils of the three phase motor. This electric circuit can execute a battery warming process of increasing the temperature of each battery by transferring electric power between the two batteries via the neutral point.

### Summary of Invention

### Technical Problem

Depending on the configuration of the electric circuit, electric power may be transferred in a particular power transfer direction (e.g., direction from the second battery to the first battery) while boosting a voltage, but electric power may be transferred in another power transfer direction (e.g., from the first battery to the second battery) while bucking a voltage. In the case of power transfer while bucking a voltage, electric power cannot be transferred unless the output voltage of the battery from which electric power is transferred is higher than the output voltage of the battery to which the electric power is transferred. Therefore, the battery warming process may not be properly executed. The present teachings propose a technique to appropriately execute a battery warming process in an electric circuit where electric power is transferred while bucking a voltage in a specific power transfer direction.

### Solution to Technical Problem.

(Configuration 1) An electric circuit according to Configuration 1 is mounted in a vehicle. The electric circuit may comprise: a first battery; a second battery; a three phase motor; an inverter circuit, and a control circuit. The three phase motor comprises three coils comprising a U-phase coil, a V-phase coil, and a W-phase coil, wherein each of the three coils has a first connection terminal disposed at one end thereof and a second connection terminal disposed at another end thereof and the three phase motor comprises a neutral point at which the second connection terminals of the three coils are connected to each other. The inverter circuit is connected to the first connection terminal of the U-phase coil, the first connection terminal of the V-phase coil, and the first connection terminal of the W-phase coil. The inverter circuit comprises: a high potential line; a low potential line; and three series switch circuits respectively arranged for the three coils. Each of the three series switch circuits comprises an upper reverse-conducting switching element and a lower reverse-conducting switching element, the upper reverse-conducting switching element being a reverse-conducting switching element connected between the first connection terminal of corresponding one of the three coils and the high potential line, and the lower reverse-conducting switching element being a reverse-conducting switching element connected between the first connection terminal of the corresponding one of the three coils and the low potential line. The control circuit is configured to execute a battery warming process. The battery warming process comprises: a voltage difference adjustment process and a periodic power transfer process. The voltage difference adjustment process is a process of adjusting a voltage difference obtained by subtracting an output voltage of the second battery from an output voltage of the first battery such that the voltage difference is equal to or greater than a reference value. The periodic power transfer process is a process of causing a converter circuit to alternately and repeatedly execute a first power transfer process and a second power transfer process, wherein the converter circuit comprises a specific series switch circuit which is at least one of the three series switch circuits and a specific coil which is at least one of the three coils and corresponds to the specific series switch circuit, the converter circuit transfers electric power from the second battery to the first battery while boosting a voltage in the first power transfer process, and the converter circuit transfers electric power from the first battery to the second battery while bucking a voltage in the second power transfer process. In the periodic power transfer process, an amplitude of the voltage difference is smaller than the reference value.

In the present teachings, a reverse-conducting switching element means an element in which a switch and a diode are connected in parallel, with a cathode of the diode connected to a high potential-side terminal of the switch and an anode of the diode connected to a low potential-side terminal of the switch. The switch may be a semiconductor switching device such as a field effect transistor or an insulated gate bipolar transistor, for example. The diode may be a pn diode or a Schottky barrier diode. The switch and the diode may be disposed on a common semiconductor substrate or on separate semiconductor substrates. In the present teachings, a reverse-conducting switching element being "ON" means that a switch constituting the reverse-conducting switching element is "ON", and the reverse-conducting switching element being "OFF" means the switch constituting the reverse-conducting switching element is "OFF".

In this electric circuit, in the voltage difference adjustment process, the voltage difference is adjusted such that the voltage difference obtained by subtracting the output voltage of the second battery from the output voltage of the first battery is equal to or greater than the reference value, and the periodic power transfer process is executed thereafter. That is, the periodic power transfer process is initiated with the output voltage of the first battery being equal to or greater than the output voltage of the second battery. In addition, the amplitude of the voltage difference in the periodic power transfer process is smaller than the reference value. Therefore, the output voltage of the first battery can be suppressed from becoming lower than the output voltage of the second battery during the periodic power transfer process. Due to this, in the second power transfer process of the periodic power transfer process (i.e., the operation of transferring electric power while bucking a voltage), electric power can be appropriately transferred from the first battery to the second battery, and the temperatures of the first and second batteries can be properly increased.

### Brief Description of Drawings

[FIG. 1] A circuit diagram of an electric circuit of a first embodiment (showing a current path when a lower reverse-conducting switching element 35VL is ON in a boost converter operation).
[FIG. 2] A circuit diagram of the electric circuit of the first embodiment (diagram showing the current path when the lower reverse-conducting switching element 35VL is OFF in the boost converter operation).
[FIG. 3] A circuit diagram of the electric circuit of the first embodiment (diagram showing the current path when an upper reverse-conducting switching element 35VU is ON in a buck converter operation).
[FIG. 4] A circuit diagram of the electric circuit of the first embodiment (diagram showing the current path when the upper reverse-conducting switching element 35VU is OFF in the buck converter operation).
[FIG. 5] A flowchart showing a battery warming process.
[FIG. 6] A circuit diagram showing current I1, I2, and I3 flowing in the electric circuit of the first embodiment.
[FIG. 7] A graph showing change in current I1 and current I2 in a voltage difference adjustment process of the first embodiment.
[FIG. 8] A graph showing change in output voltages V1 and V2 in the entirety of the battery warming process.
[FIG. 9] A graph showing change in current I1 and current I2 in a periodic power transfer process of the first embodiment.
[FIG. 10] A graph showing change in a voltage difference ΔV in the periodic power transfer process of the first embodiment.
[FIG. 11] A graph showing change in current I1 and current I2 in a voltage difference adjustment process of Variant 1.
[FIG. 12] A graph showing change in current I1 and current I2 in a voltage difference adjustment process of Variant 2.
[FIG. 13] A graph showing change in current I1 and current I2 in a periodic power transfer process of Variant 2.
[FIG. 14] A graph showing change in output voltages V1 and V2 in the entirety of a battery warming process in Variant 2.
[FIG. 15] A graph showing change in current I1 and current I2 in a voltage difference adjustment process in a second embodiment.
[FIG. 16] A circuit diagram of an electric circuit in a third embodiment.
[FIG. 17] A circuit diagram of an electric circuit in a fourth embodiment.

### Description of Embodiments

Following Configuration 1 above, additional configurations of the electric circuit disclosed herein will be described below.

### (Configuration 2)

The electric circuit according to configuration 1, wherein, in the voltage difference adjustment process, the control circuit causes the converter circuit to execute the first power transfer process.

### (Configuration 3)

The electric circuit according to Configuration 1, wherein, in the voltage difference adjustment process, the control circuit charges the first battery by applying a supply voltage supplied by charging equipment external to the vehicle to the first battery, and charges the second battery by applying a voltage obtained by bucking the supply voltage using the converter circuit to the second battery.

### (Configuration 4)

The electric circuit according to Configuration 1, wherein, in the voltage difference adjustment process, the control circuit causes electric power of the second battery to be consumed.

### (Configuration 5)

The electric circuit according to any one of Configurations 1 to 4, wherein the control circuit executes the battery warming process while the first battery and the second battery are charged in parallel by charging equipment external to the vehicle.

### (Configuration 6)

The electric circuit according to any one of Configurations 1 to 5, wherein the control circuit executes a process of decreasing the voltage difference after execution of the periodic power transfer process.

### (Configuration 7)

The electric circuit according to any one of Configurations 1 to 6, wherein the control circuit executes the periodic power transfer process in a state in which a positive electrode of the first battery is connected to the high potential line, a negative electrode of the first battery is connected to the low potential line, a positive electrode of the second battery is connected to the neutral point, and a negative electrode of the second battery is connected to the low potential line.

### (Configuration 8)

The electric circuit according to any one of configurations 1 to 8, wherein the control circuit executes the periodic power transfer process in a state in which a positive electrode of the first battery is connected to the high potential line, a negative electrode of the first battery is connected to the low potential line, a positive electrode of the second battery is connected to the high potential line, and a negative electrode of the second battery is connected to the neutral point.

According to Configuration 2, the output voltage of the first battery can be increased, and the voltage difference can be increased to a value equal to or greater than the reference value.

According to Configuration 3, the first battery can be charged faster than the second battery, allowing the voltage difference to increase to a value equal to or greater than the reference value.

According to Configuration 4, the output voltage of the second battery can be reduced, allowing the voltage difference to increase to a value equal to or greater than the reference value.

According to Configuration 5, the first and second batteries can be charged efficiently.

According to Configuration 6, the output voltages of the first and second batteries can be balanced after the temperatures of the batteries are increased.

According to Configuration 7, the first power transfer process and the second power transfer process can be executed.

According to Configuration 8, the first power transfer process and the second power transfer process can be executed.

### First Embodiment

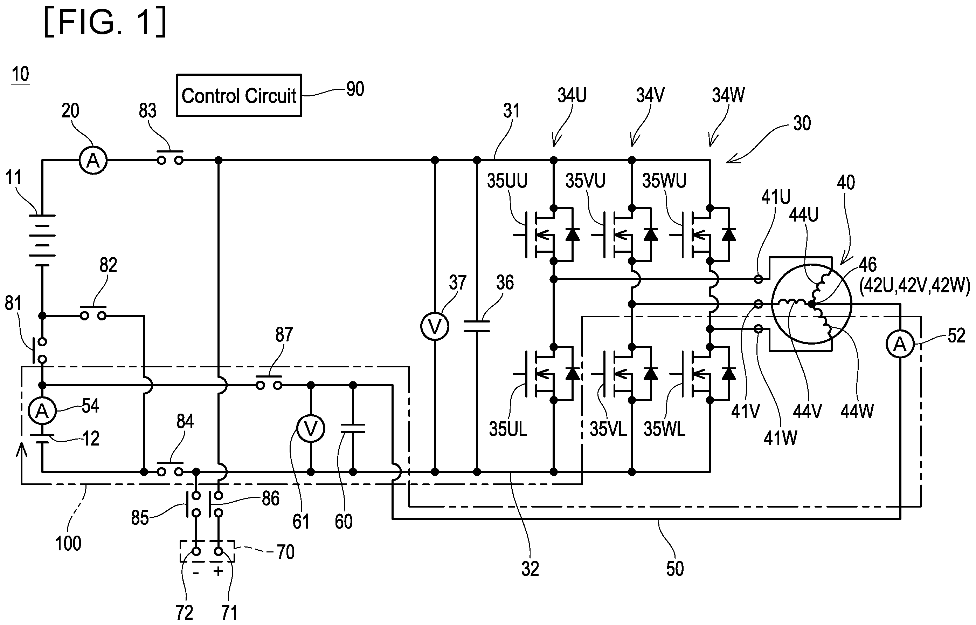

An electric circuit 10 shown in FIG. 1 is mounted in a vehicle. The electric circuit 10 comprises an upper battery 11, a lower battery 12, an inverter circuit 30, and a three phase motor 40. The three phase motor 40 is a motor for a vehicle to run. The inverter circuit 30 converts DC power supplied from the upper battery 11 and the lower battery 12 into AC power and supplies it to the three phase motor 40. Due to this, the three phase motor 40 rotates drive wheel(s) and the vehicle runs.

The three phase motor 40 has a U-phase coil 44U, a V-phase coil 44V, and a W-phase coil 44W. Terminals 41U and 42U are disposed at respective ends of the coil 44U. Terminals 41V and 42V are disposed at respective ends of the coil 44V. Terminals 41W and 42W are disposed at respective ends of the coil 44W. The terminals 42U, 42V, and 42W are connected to each other at a neutral point 46.

The inverter circuit 30 is connected to the terminals 41U, 41V, and 41W of the three phase motor 40. The inverter circuit 30 has a high potential line 31, a low potential line 32, and three series switch circuits 34U, 34V, and 34W. Each of the series switch circuits 34U, 34V, and 34W is composed of two reverse-conducting switching elements 35 connected in series between the high potential line 31 and the low potential line 32. In the following, of the two series-connected reverse-conducting switching elements 35, the one connected to the high potential line 31 may be referred to as an upper reverse-conducting switching element and the one connected to the low potential line 32 may be referred to as a lower reverse-conducting switching element. Each reverse-conducting switching element 35 has a structure in which a switching element (e.g., insulated gate bipolar transistor or field-effect transistor) and a diode (e.g., pn diode or Schottky barrier diode) are connected in anti-parallel. In each reverse-conducting switching element 35, the cathode of the diode is connected to the high potential terminal (i.e., collector or drain) of the switching element and the anode of the diode is connected to the low potential terminal (i.e., emitter or source) of the switching element.

The series switch circuit 34U is disposed for the coil 44U. The series switch circuit 34U has an upper reverse-conducting switching element 35UU and a lower reverse-conducting switching element 35UL. The high potential terminal of the upper reverse-conducting switching element 35UU is connected to the high potential line 31. The low potential terminal of the upper reverse-conducting switching element 35UU and the high potential terminal of the lower reverse-conducting switching element 35UL are connected to the terminal 41U. The low potential terminal of the lower reverse-conducting switching element 35UL is connected to the low potential line 32.

The series switch circuit 34V is disposed for the coil 44V. The series switch circuit 34V has an upper reverse-conducting switching element 35VU and a lower reverse-conducting switching element 35VL. The high potential terminal of the upper reverse-conducting switching element 35VU is connected to the high potential line 31. The low potential terminal of the upper reverse-conducting switching element 35VU and the high potential terminal of the lower reverse-conducting switching element 35VL are connected to the terminal 41V. The low potential terminal of the lower reverse-conducting switching element 35VL is connected to the low potential line 32.

The series switch circuit 34W is disposed for the coil 44W. The series switch circuit 34W has an upper reverse-conducting switching element 35WU and a lower reverse-conducting switching element 35WL. The high potential terminal of the upper reverse-conducting switching element 35WU is connected to the high potential line 31. The low potential terminal of the upper reverse-conducting switching element 35WU and the high potential terminal of the lower reverse-conducting switching element 35WL are connected to the terminal 41W. The low potential terminal of the lower reverse-conducting switching element 35WL is connected to the low potential line 32.

A capacitor 36 is connected between the high potential line 31 and the low potential line 32. A voltmeter 37 is connected between the high potential line 31 and the low potential line 32.

A neutral point line 50 is connected to the neutral point 46 of the three phase motor 40. The other end of the neutral point line 50 is connected to the positive electrode of the lower battery 12. An ammeter 54 is also disposed at the positive electrode of the lower battery 12. The ammeter 54 detects the current flowing in the lower battery 12. A capacitor 60 is connected between the neutral point line 50 and the low potential line 32. A voltmeter 61 is connected between the neutral point line 50 and the low potential line 32.

The electric circuit 10 has a charging port 70. The charging port 70 is configured to have a connector of charging equipment external to the vehicle connected thereto. The charging port 70 has a high potential charging terminal 71 and a low potential charging terminal 72. When the connector of the charging equipment is connected to the charging port 70, DC voltage is applied by the charging equipment between the high potential charging terminal 71 and the low potential charging terminal 72 in an orientation along which the high potential charging terminal 71 is at higher potential.

The electric circuit 10 has a plurality of relay switches 81-87. By each relay switch switching, mutual connection relationship between the upper battery 11, the lower battery 12, the high potential line 31, the low potential line 32, the neutral point 46, and the charging port 70 is changed.

The relay switch 81 is disposed between the negative electrode of the upper battery 11 and the positive electrode of the lower battery 12. When the relay switch 81 is ON, the negative electrode of the upper battery 11 is connected to the positive electrode of the lower battery 12 and the neutral point line 50.

The relay switch 82 is disposed between the negative electrode of the upper battery 11 and the negative electrode of the lower battery 12. When the relay switch 82 is ON, the negative electrode of the upper battery 11 and the negative electrode of the lower battery 12 are connected.

An ammeter 20 and a relay switch 83 are disposed in series between the positive electrode of the upper battery 11 and the high potential line 31. When the relay switch 83 is ON, the positive electrode of the upper battery 11 is connected to the high potential line 31. The ammeter 20 detects the current flowing in the upper battery 11.

The relay switch 84 is disposed between the negative electrode of the lower battery 12 and the low potential line 32. When the relay switch 84 is ON, the negative electrode of the lower battery 12 is connected to the low potential line 32.

The relay switch 85 is disposed between the low potential charging terminal 72 and the low potential line 32. When the relay switch 85 is ON, the low potential charging terminal 72 is connected to the low potential line 32.

The relay switch 86 is disposed between the high potential charging terminal 71 and the high potential line 31. When the relay switch 86 is ON, the high potential charging terminal 71 is connected to the high potential line 31.

The relay switch 87 is disposed on the neutral point line 50. When the relay switch 87 is ON, the positive electrode of the lower battery 12 is connected to the neutral point 46 via the neutral point line 50.

The electric circuit 10 has a control circuit 90. The control circuit 90 is composed of a CPU and a memory, for example. The memory of the control circuit 90 has a program to control the electric circuit 10 stored therein. The control circuit 90 controls switching elements of each reverse-conducting switching element 35 and the relay switches 81 to 87 according to the program.

The control circuit 90 can execute a normal operation to drive the three phase motor 40. In the normal operation, the control circuit 90 turns ON the relay switches 81, 83, and 84 and turns OFF the relay switches 82, 85, 86, and 87. In this state, the upper battery 11 and the lower battery 12 are connected in series between the high potential line 31 and the low potential line 32. Due to this, the DC voltage output by the series circuit of the upper battery 11 and the lower battery 12 is applied between the high potential line 31 and the low potential line 32. The control circuit 90 converts the DC power applied between the high potential line 31 and the low potential line 32 to AC power by switching the switching elements of each reverse-conducting switching element 35, and supplies the AC power to the three phase motor 40. This causes the three phase motor 40 to rotate. The control circuit 90 controls a torque and rotation speed of the three phase motor 40 by changing the amplitude, frequency, for example, of the AC current supplied to the three phase motor 40.

The control circuit 90 can operate the inverter circuit 30 and the three phase motor 40 as a DC-DC converter circuit. That is, inside the inverter circuit 30 and the three phase motor 40, a DC-DC converter circuit composed of the series switch circuit 34U and the coil 44U, a DC-DC converter circuit composed of the series switch circuit 34V and the coil 44V, and a DC-DC converter circuit composed of the series switch circuit 34W and the coil 44W are established. The control circuit 90 can cause the three DC-DC converter circuits to operate synchronously, or, with one or two of the three DC-DC converter circuits stopped, cause the remaining DC-DC converter circuit(s) to operate. In the DC-DC converter circuit(s) that are stopped, both the upper reverse-conducting switching element and the lower reverse-conducting switching element are controlled to be OFF. As an example, operation of a DC-DC converter circuit composed of the series switch circuit 34V and the coil 44V (i.e., a V-phase DC-DC converter circuit) will be described below.

When the DC-DC converter circuit is to be operated, the control circuit 90 turns ON the relay switches 84 and 87. That is, the control circuit 90 connects the positive electrode of the lower battery 12 to the neutral point 46 and the negative electrode of the lower battery 12 to the low potential line 32. In this state, the control circuit 90 can execute a boost converter operation and a buck converter operation.

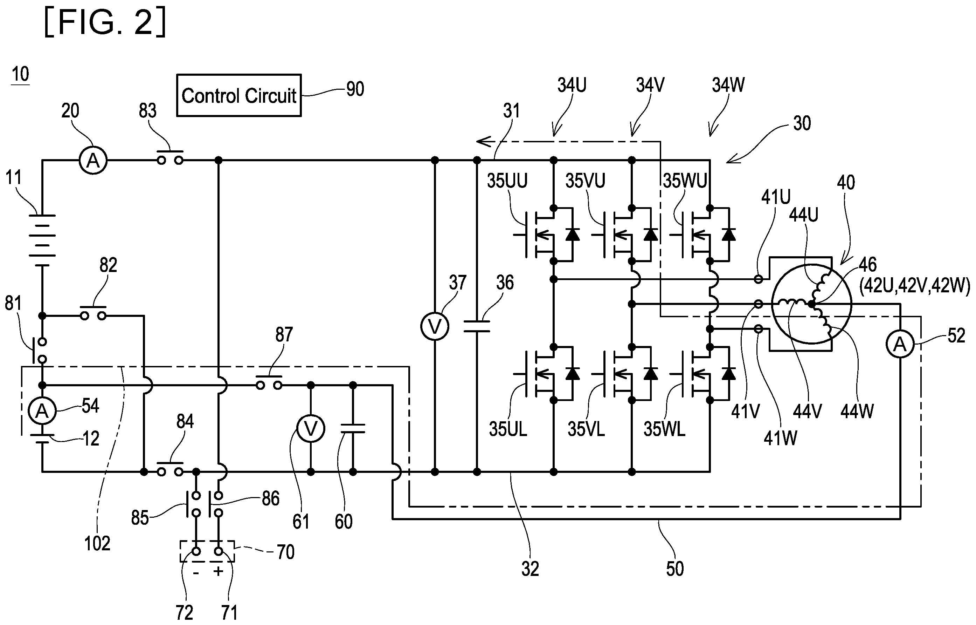

The boost converter operation is an operation of boosting the output voltage of the lower battery 12 and applies it between the high potential line 31 and the low potential line 32. In the boost converter operation, the control circuit 90 repeatedly switches the lower reverse-conducting switching element 35VL. The upper reverse-conducting switching element 35VU may be controlled in any manner as long as a condition that the lower reverse-conducting switching element 35VL and the upper reverse-conducting switching element 35VU are not ON simultaneously is met. For example, the control circuit 90 may alternately turn ON the lower reverse-conducting switching element 35VL and the upper reverse-conducting switching element 35VU, or may keep the upper reverse-conducting switching element 35VU OFF. Arrow 100 in FIG. 1 shows a current path when the lower reverse-conducting switching element 35VL is ON in the boost converter operation. As shown by arrow 100, when the lower reverse-conducting switching element 35VL is ON, current flows from the positive electrode of the lower battery 12 to the negative electrode of the lower battery 12 via the neutral point 46, the coil 44V, a transistor of the lower reverse-conducting switching element 35VL, and the low potential line 32. When the lower reverse-conducting switching element 35VL is then OFF, an induced voltage is generated in the coil 44V, and current flows as shown by arrow 102 in FIG. 2. That is, current flows from the positive electrode of the lower battery 12 to the high potential line 31 via the neutral point 46, the coil 44V, and the diode of the upper reverse-conducting switching element 35VU. In the boost converter operation, current flows alternately in paths shown by arrows 100 and 102. In the boost converter operation, a voltage higher than the output voltage of the lower battery 12 is applied between the high potential line 31 and the low potential line 32, since a voltage obtained by adding the induced voltage generated by the coil 44V to the output voltage of the lower battery 12 is applied to the high potential line 31.

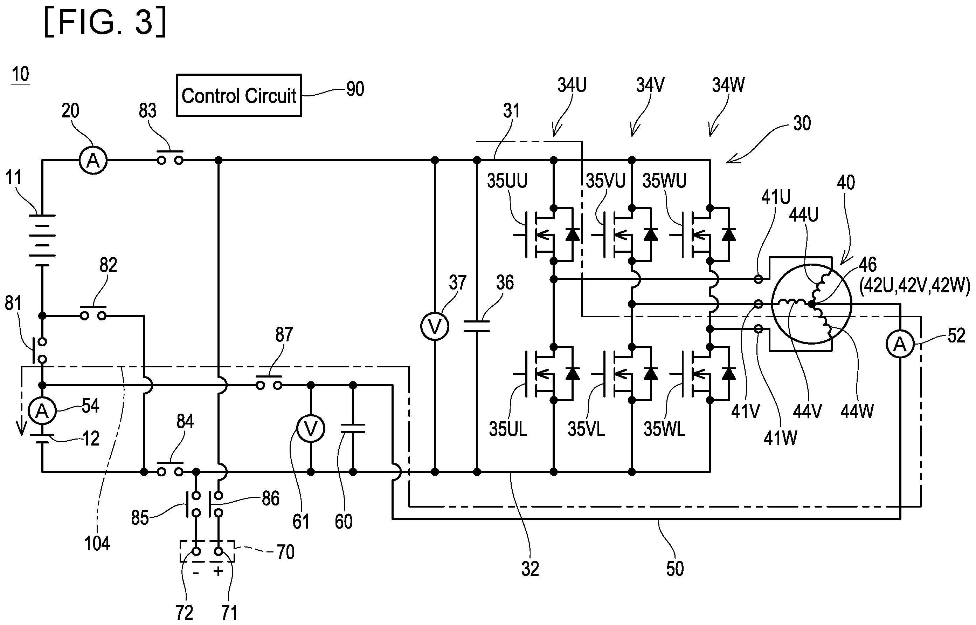

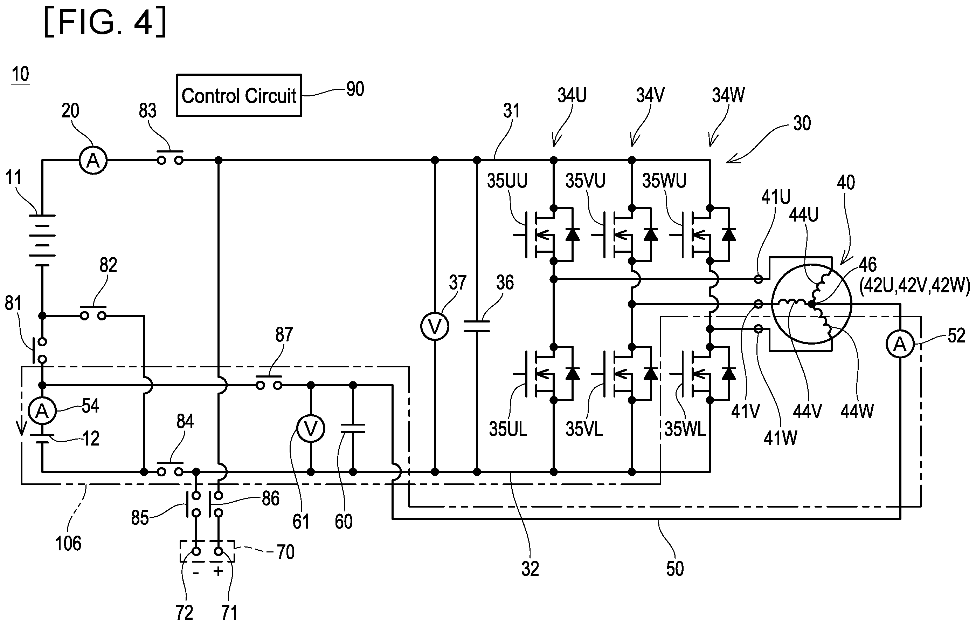

The buck converter operation is an operation of lowering the voltage between the high potential line 31 and the low potential line 32 and applies it to the lower battery 12. In the buck converter operation, the control circuit 90 repeatedly switches the upper reverse-conducting switching element 35VU. The lower reverse-conducting switching element 35VL may be controlled in any manner as long as a condition that the lower reverse-conducting switching element 35VL and the upper reverse-conducting switching element 35VU are not ON simultaneously is met. For example, the control circuit 90 may alternately turn ON the lower reverse-conducting switching element 35VL and the upper reverse-conducting switching element 35VU, or may keep the lower reverse-conducting switching element 35VL OFF. Arrow 104 in FIG. 3 shows a current path when the upper reverse-conducting switching element 35VU is ON in the buck converter operation. As shown by arrow 104, when the upper reverse-conducting switching element 35VU is ON, current flows from the high potential line 31 to the positive electrode of the lower battery 12 via the upper reverse-conducting switching element 35VU, the coil 44V, and the neutral point 46. When the upper reverse-conducting switching element 35VU is then OFF, an induced voltage is generated in the coil 44V, and current flows as shown by arrow 106 in FIG. 4. That is, current flows from the negative electrode of the lower battery 12 to the positive electrode of the lower battery 12 via the diode of the lower reverse-conducting switching element 35VL, the coil 44V, and the neutral point 46. In the buck converter operation, current flows alternately in paths shown by arrows 104 and 106. In the buck converter operation, the voltage between the high potential line 31 and the low potential line 32 is applied separately to the coil 44V and the lower battery 12, such that a voltage lower than the voltage between the high potential line 31 and the low potential line 32 is applied to the lower battery 12.

The control circuit 90 can also execute a direct connection operation with a DC-DC converter circuit. The direct connection operation is an operation of applying the voltage between the high potential line 31 and the low potential line 32 to the lower battery 12 as it is. In the direct connection operation, the control circuit 90 maintains the upper reverse-conducting switching element 35VU ON and maintains the lower reverse-conducting switching element 35VL OFF. Thus, in the direct connection operation, DC current flows in the path shown by arrow 104 in FIG. 3, and the voltage between the high potential line 31 and the low potential line 32 is applied to the lower battery 12.

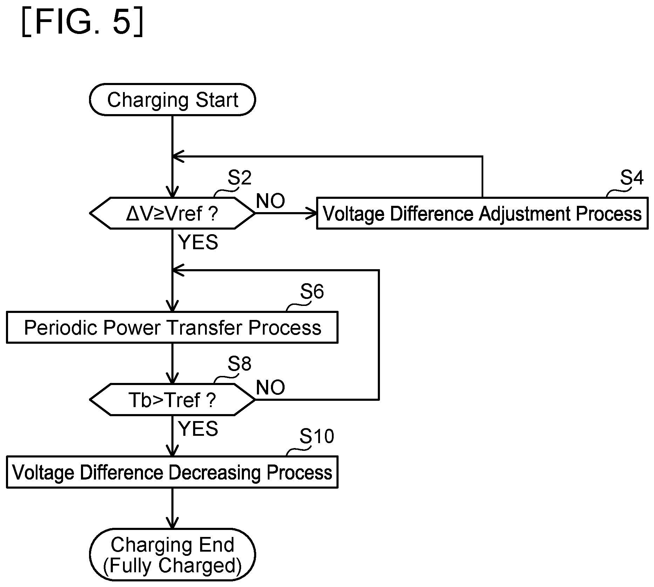

Operation of the electric circuit 10 when charging the upper battery 11 and the lower battery 12 by charging equipment external to the vehicle will be described next. When charging the upper battery 11 and the lower battery 12, a connector of external charging equipment will be connected to the charging port 70. The control circuit 90 then turns ON the relay switches 82, 83, 84, 85, 86, and 87 and turns OFF the relay switch 81. The external charging equipment applies a DC voltage between the high potential charging terminal 71 and the low potential charging terminal 72 in an orientation along which the high potential charging terminal 71 is at higher potential. Thus, the voltage supplied by the external charging equipment is applied between the high potential line 31 and the low potential line 32. The control circuit 90 executes the battery warming process shown in FIG. 5 according to the program stored in the memory.

In step S2, the control circuit 90 detects an output voltage V1 of the upper battery 11 and an output voltage V2 of the lower battery 12. The output voltage V2 can be detected, for example, by the voltmeter 61. The output voltage V1 can be calculated, for example, by subtracting the output voltage V2 from the detected value of the voltmeter 37. The control circuit 90 calculates a voltage difference ΔV (=V1-V2) by subtracting the output voltage V2 from the output voltage V1. In step S2, the control circuit 90 determines whether the voltage difference ΔV is equal to or greater than a reference value Vref. The reference value Vref is a predetermined value. If the voltage difference ΔV is less than the reference value Vref, the control circuit 90 executes a voltage difference adjustment process in step S4.

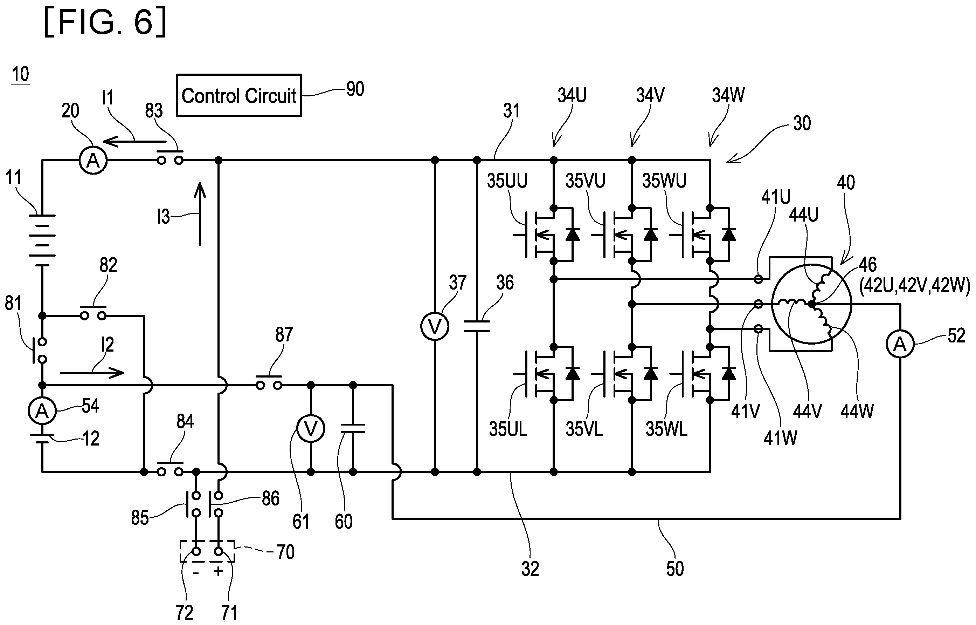

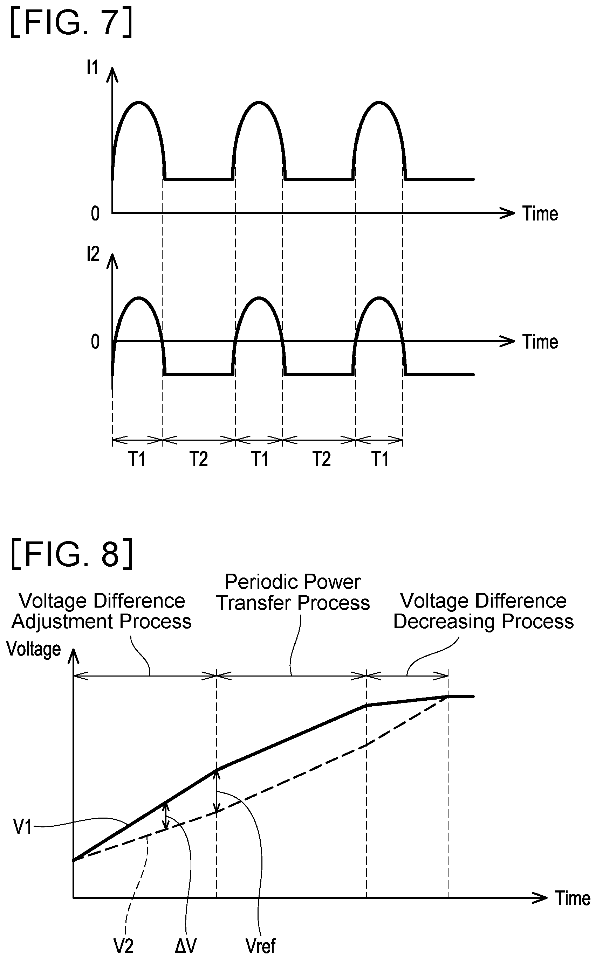

FIG. 6 shows current I1 to I3 flowing in the electric circuit 10. The current I1 is the current flowing in the upper battery 11, the current I2 is the current flowing in the lower battery 12, and the current I3 is the current supplied from external charging equipment to the high potential charging terminal 71. For the current I1, an orientation in which the upper battery 11 is charged is shown as positive. For the current I2, an orientation in which the lower battery 12 is discharged is shown as positive. FIG. 7 also shows change in the current I1 and the current I2 in the voltage difference adjustment process. In the voltage difference adjustment process, the control circuit 90 alternately executes the boost converter operation and the direct connection operation. In FIG. 7, a period T1 is a period during which the boost converter operation is being executed and a period T2 is a period during which the direct connection operation is being executed.

Because the relay switches 82, 83 and 84 are ON during the execution of the process in FIG. 5, the positive electrode of the upper battery 11 is connected to the high potential line 31 and the negative electrode of the upper battery 11 is connected to the low potential line 32. In the period T1, the current I2 becomes positive because current flows from the lower battery 12 to the high potential line 31 due to the boost converter operation. In addition, the current I3 is supplied to the high potential line 31 from the external charging equipment. Therefore, the current I1 flowing in the upper battery 11 is relatively high, and is the sum of the current I2 and the current I3. Due to this, in the period T1, the upper battery 11 is charged and the lower battery 12 is discharged.

In the period T2, the high potential line 31 is connected to the positive electrode of the lower battery 12 by the direct connection operation. Due to this, the current I3 supplied from the external charging equipment is split and supplied to the upper battery 11 and the lower battery 12. Therefore, the current I1 is a positive, relatively low value, and the current I2 is a negative value. Therefore, in the period T2, the upper battery 11 and the lower battery 12 are charged.

As described above, in the voltage difference adjustment process, the upper battery 11 is charged in both periods T1 and T2. Therefore, as shown in FIG. 8, the output voltage V1 of the upper battery 11 rises during the voltage difference adjustment process. In the voltage difference adjustment process, the lower battery 12 is discharged in the period T1 and the lower battery 12 is charged in the period T2. The control circuit 90 controls the amount of charge charged to the lower battery 12 in the period T2 to be greater than the amount of charge discharged from the lower battery 12 in the period T1. Therefore, as shown in FIG. 8, during the voltage difference adjustment process, the output voltage V2 of the lower battery 12 rises at a slower rate than the output voltage V1 of the upper battery 11. Therefore, the voltage difference ΔV increases during the voltage difference adjustment process.

In the period T2, the buck converter operation may be executed instead of the direct connection operation. Since in this case as well, current flows from the high potential line 31 to the lower battery 12, the lower battery 12 can be charged. In the buck converter operation, the charging current to the lower battery 12 can be smaller than in the direct connection operation.

The control circuit 90 repeats steps S2 and S4 until the voltage difference ΔV becomes equal to or greater than the reference value Vref. When the voltage difference ΔV becomes equal to or greater than the reference value Vref, the control circuit 90 determines YES in step S2 and executes the periodic power transfer process in step S6.

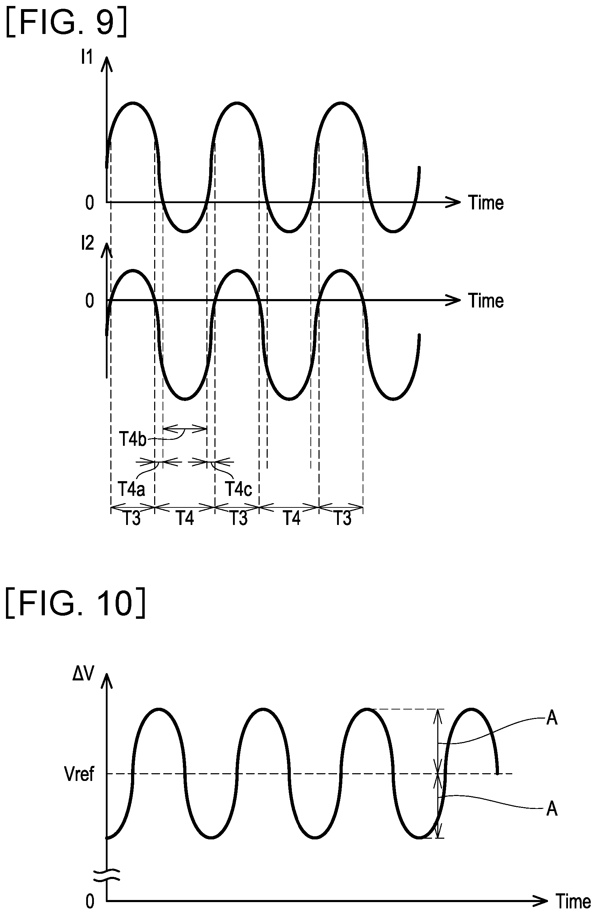

FIG. 9 shows change in current I1 and I2 in the periodic power transfer process. In the periodic power transfer process, the control circuit 90 alternately executes the boost converter operation and the buck converter operation. In FIG. 9, the period T3 is a period during which the boost converter operation is being executed, and the period T4 is a period during which the buck converter operation is being executed.

In the period T3, the current I2 becomes positive because current flows from the lower battery 12 to the high potential line 31 due to the boost converter operation. In addition, the current I3 is supplied to the high potential line 31 from the external charging equipment. Therefore, the current I1 flowing in the upper battery 11 is relatively high, and is the sum of the current I2 and current I3. Therefore, in the period T3, the upper battery 11 is charged and the lower battery 12 is discharged.

In the period T4, the current I2 becomes negative because current flows from the high potential line 31 to the lower battery 12 due to the buck converter operation. In a period T4a of the period T4 where the absolute value of the current I2 is small, the current I1 is positive because a part of the current I3 flows to the upper battery 11. Then, in a period T4b when the absolute value of the current I2 is large, all of the current I3 flows to the lower battery 12, and the upper battery 11 is discharged. Therefore, in the period T4b, the current I1 becomes negative. Then, in a period T4c when the absolute value of the current I2 is small, the current I1 becomes positive as in the period T4a.

As described above, in the periodic power transfer process, the lower battery 12 is discharged and the upper battery 11 is charged in the period T3. That is, in the period T3, the first power transfer process of transferring electric power from the lower battery 12 to the upper battery 11 while boosting the voltage is executed. In the periodic power transfer process, the upper battery 11 is discharged and the lower battery 12 is charged in the period T4b. That is, in the period T4b, the second power transfer process of transferring electric power from the upper battery 11 to the lower battery 12 while bucking the voltage is executed. Therefore, as shown in FIG. 10, the voltage difference ΔV varies periodically during the periodic power transfer process. The control circuit 90 executes the periodic power transfer process such that the amount of charge transferred from the upper battery 11 to the lower battery 12 and the amount of charge transferred from the lower battery 12 to the upper battery 11 are equal. Therefore, the average value of the voltage difference ΔV is maintained at the reference value Vref while the periodic power transfer process is ongoing. In addition, an amplitude A of the voltage difference ΔV in the periodic power transfer process (i.e., half of the difference between the maximum value and the minimum value of the voltage difference ΔV within a period of one cycle of the varying voltage difference ΔV) is smaller than the reference value Vref. Therefore, the voltage difference ΔV never becomes negative during the periodic power transfer process. That is, the output voltage V1 is never lower than the output voltage V2 during the periodic power transfer process. Due to this, the first power transfer process (i.e., boost converter operation) and the second power transfer process (i.e., buck converter operation) can be executed appropriately in the periodic power transfer process.

As described above, in the periodic power transfer process, charging and discharging are repeated in the upper battery 11 and the lower battery 12. This allows the temperature of the upper battery 11 and the lower battery 12 to be increased efficiently. The increase in temperatures of the upper battery 11 and the lower battery 12 allows the upper battery 11 and the lower battery 12 to be charged efficiently.

The periodic power transfer process is executed while the upper battery 11 and the lower battery 12 are charged in parallel by external charging equipment. As described above, the control circuit 90 maintains the voltage difference ΔV at the reference value Vref. Therefore, as shown in FIG. 8, in the periodic power transfer process, the output voltage V1 and the output voltage V2 rise at approximately the same rate.

After step S6, the control circuit 90 detects a battery temperature Tb in step S8. The battery temperature Tb may be the temperature of the upper battery 11, the temperature of the lower battery 12, or a value (e.g., an average value) calculated from the temperatures of the upper battery 11 and the lower battery 12. The control circuit 90 repeats steps S6 and S8 until the battery temperature Tb becomes higher than a reference temperature Tref. When the battery temperature Tb becomes higher than the reference temperature Tref, the control circuit 90 executes a voltage difference decreasing process in step S10.

In the voltage difference decreasing process, the control circuit 90 executes the direct connection operation. Due to this, the current I3 flows separately into a path that charges the upper battery 11 (i.e., path of the current I1) and a path that charges the lower battery 12 (i.e., path of arrow 104 in FIG. 3). As a result, the upper battery 11 and the lower battery 12 are charged in parallel. A greater amount of charging current flows to the lower battery 12, which has a lower output voltage. Therefore, as shown in FIG. 8, in the voltage difference decreasing process, the output voltage V2 of the lower battery 12 rises at a faster rate than the output voltage V1 of the upper battery 11. Therefore, the voltage difference ΔV is decreased. When the batteries 11 and 12 are sufficiently charged, the control circuit 90 turns OFF the relay switches 82 to 87 and terminates charging the batteries 11 and 12.

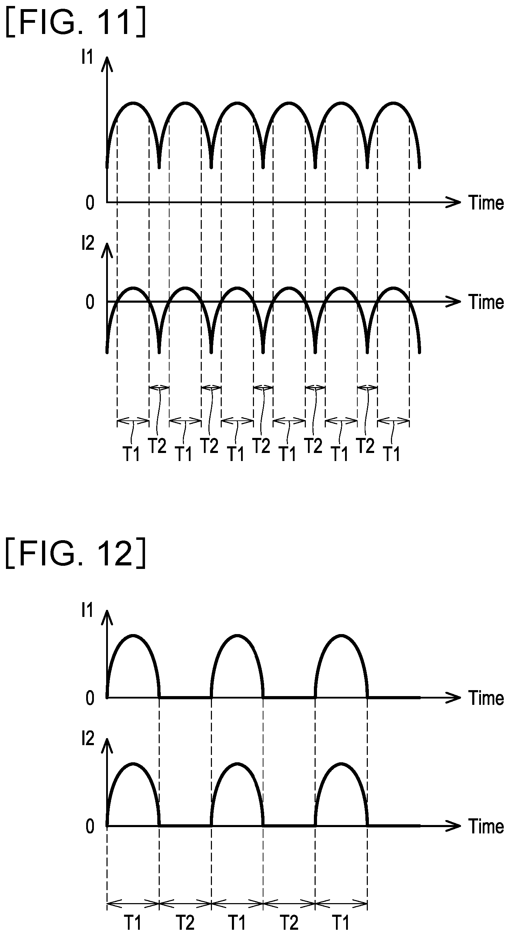

In the above embodiment, as shown in FIG. 7, the control circuit 90 controls the current I2 to a half-wave rectified waveform in the voltage difference adjustment process. However, as shown in FIG. 11, the control circuit 90 may control the current I2 to a full-wave rectified waveform in the voltage difference adjustment process. That is, as long as the voltage difference ΔV can be increased in the voltage difference adjustment process, the waveform of the current I2 may be any waveform.

In the first embodiment described above, the voltage difference adjustment process, the periodic power transfer process, and the voltage difference decreasing process are executed while the batteries 11 and 12 are being charged by external charging equipment. However, these processes may be executed while the batteries 11 and 12 are not being charged. That is, these processes may be executed with the relay switches 85 and 86 OFF. FIGS. 12 to 14 show change in each value in this case.

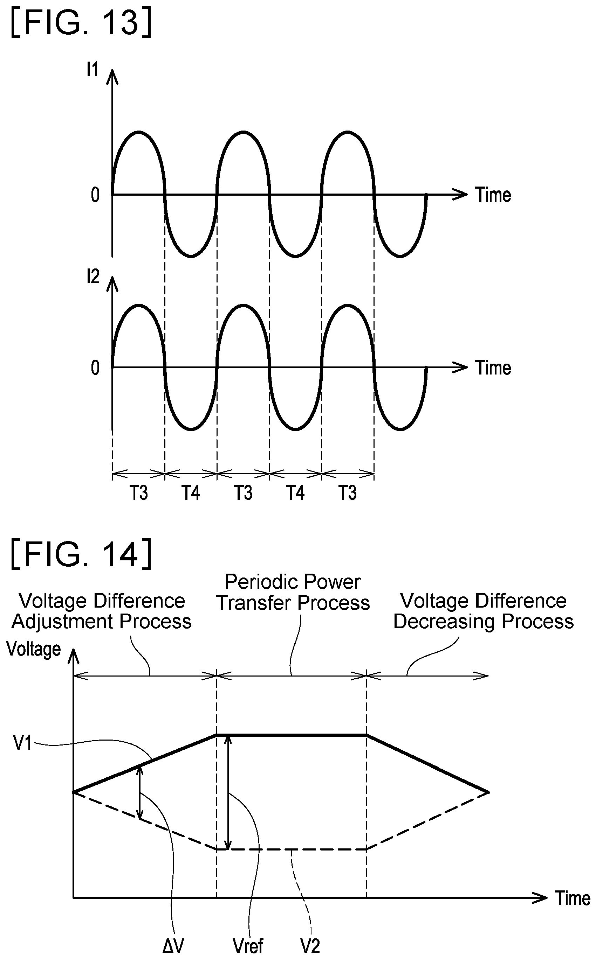

As shown in FIG. 12, in the voltage difference adjustment process, the control circuit 90 transfers electric power from the lower battery 12 to the upper battery 11 while boosting the voltage by executing the boost converter operation in the period T1. Instead of the half-wave rectified waveform in FIG. 12, the current I1 and current I2 may be controlled to be other waveforms (e.g., full-wave rectified waveform). When there is no supply current from external charging equipment, the boost converter operation may be executed such that the current I1 and the current I2 are direct current. In the voltage difference adjustment process when there is no supply current from external charging equipment, the upper battery 11 is charged and the lower battery 12 is discharged. Therefore, as shown in FIG. 14, in the voltage difference adjustment process, the output voltage V1 rises and the output voltage V2 decreases. Due to this, the voltage difference ΔV rises to the reference value Vref.

As shown in FIG. 13, in the periodic power transfer process, the control circuit 90 executes the boost converter operation in the period T3 and the buck converter operation in the period T4. In the period T3, electric power is transferred from the lower battery 12 to the upper battery 11 while boosting the voltage, and in the period T4, electric power is transferred from the upper battery 11 to the lower battery 12 while bucking the voltage. The control circuit 90 executes the periodic power transfer process such that the amplitude A of the voltage difference ΔV is smaller than the reference value Vref. Due to this, in the periodic power transfer process, the boost converter operation and the buck converter operation can be suitably executed. Charging and discharging are repeated in the upper battery 11 and the lower battery 12, and the temperatures of the upper battery 11 and the lower battery 12 increase. As shown in FIG. 14, in the periodic power transfer process, the output voltages V1 and V2 are maintained to be substantially constant, and the voltage difference ΔV is also maintained to be substantially constant.

Then, in the voltage difference decreasing process, the direct connection operation is executed and the output voltages V1 and V2 are controlled to be approximately the same value.

Thus, even when charging by external charging equipment is not being executed, the temperatures of the batteries 11 and 12 can be increased by executing the voltage difference adjustment process and the periodic power transfer process. For example, by executing these processes in winter, the performance of the batteries 11 and 12 can be improved before the vehicle is used.

### Second Embodiment

The configuration of an electric circuit in the second embodiment is equal to that of the first embodiment (i.e., FIG. 1). In the second embodiment also, the control circuit 90 executes the processes shown in FIG. 5. However, in the second embodiment, the control circuit 90 always executes the processes of FIG. 5 with the connector of the charging equipment connected to the charging port 70. In the second embodiment, the voltage difference adjustment process differs from that of the first embodiment. Other processes in the second embodiment (i.e., periodic power transfer process, voltage difference decreasing process, etc.) are the same as those in the first embodiment.

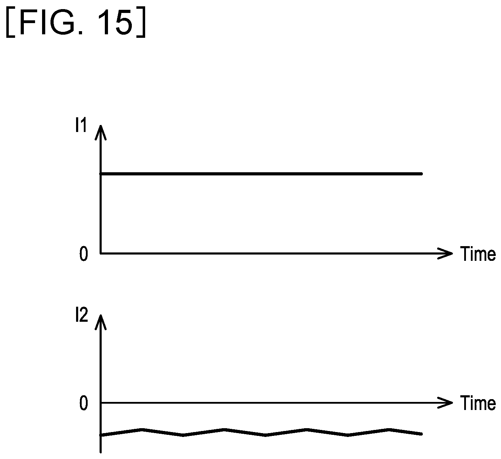

In the second embodiment, the voltage difference adjustment process is executed in a state where the relay switches 82, 83, 84, 85, 86, and 87 are ON, the relay switch 81 is OFF, and the supply voltage of the external charging equipment is applied between the high potential charging terminal 71 and the low potential charging terminal 72. In the voltage difference adjustment process of the second embodiment, the control circuit 90 continuously executes the buck converter operation. Here, the control circuit 90 controls the current I2 to a substantially constant negative value as shown in FIG. 15, by controlling the duty ratio when the upper reverse-conducting switching element 35VU switches. Here, the control circuit 90 controls the current I2 such that the absolute value of the current I2 is smaller than the absolute value of the current I1. The upper battery 11 is charged with the current I1 and the lower battery 12 is charged with the current I2. Since the absolute value of the current I1 is greater than the absolute value of the current I2, the output voltage V1 rises at a faster rate than the output voltage V2 in the voltage difference adjustment process, as shown in FIG. 8. Therefore, the voltage difference ΔV can be increased to the reference value Vref in the voltage difference adjustment process.

As described above, even in the second embodiment, the voltage difference ΔV can be increased to the reference value Vref by the voltage difference adjustment process. Therefore, in the subsequent periodic power transfer process, the boost converter operation and the buck converter operation can be suitably executed as in the first embodiment.

### Third Embodiment

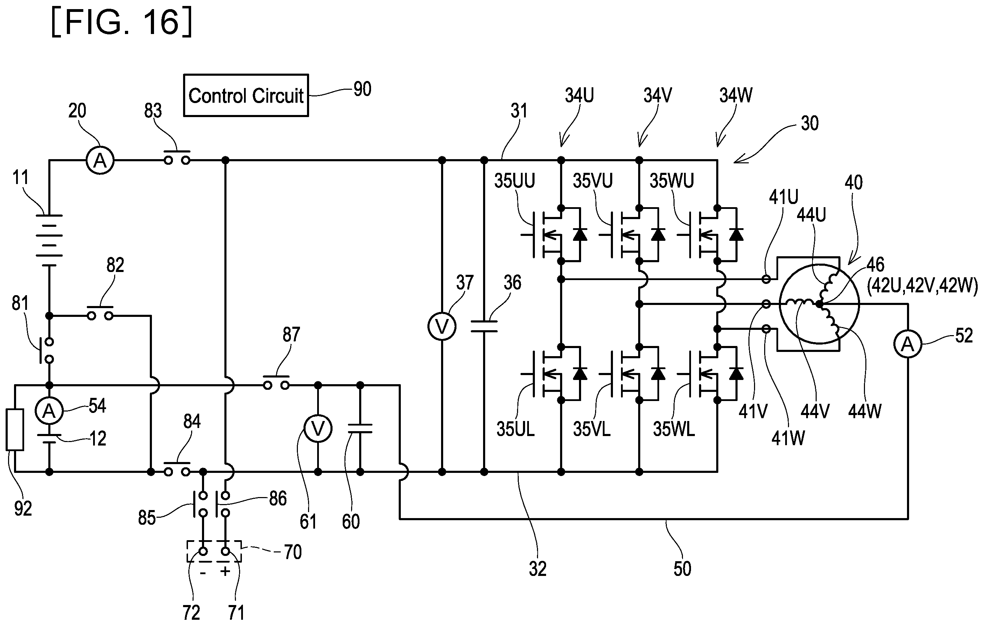

FIG. 16 shows a circuit diagram of an electric circuit of the third embodiment. The electric circuit of the third embodiment differs from the electric circuit 10 of the first embodiment (i.e., FIG. 1) in that an electrical apparatus 92 is connected between the positive and negative electrodes of the lower battery 12. The electrical apparatus 92 may be any apparatus as long as it can consume electric power. The other configurations of the electric circuit of the third embodiment are equal to those of the first embodiment. In the third embodiment also, the control circuit 90 executes the flowchart in FIG. 5 when the connector of external charging equipment is connected to the charging port 70. In the third embodiment, the voltage difference adjustment process differs from that of the first embodiment. Other processes in the third embodiment (i.e., periodic power transfer process, voltage difference decreasing process, etc.) are the same as those in the first embodiment.

In the third embodiment also, the voltage difference adjustment process is executed in a state where the relay switches 82, 83, 84, 85, 86, and 87 are ON, the relay switch 81 is OFF, and the supply voltage of the external charging equipment is applied between the high potential charging terminal 71 and the low potential charging terminal 72. In the voltage difference adjustment process of the third embodiment, the control circuit 90 executes the direct connection operation. Therefore, the current I3 supplied from the external charging equipment is supplied to be split equally between the upper battery 11 and the lower battery 12. Due to this, the upper battery 11 and the lower battery 12 are charged. In the voltage difference adjustment process of the third embodiment, the control circuit 90 causes the electric power of the lower battery 12 to be consumed by turning ON the electrical apparatus 92. Therefore, as shown in FIG. 8, the output voltage V1 rises at a faster rate than the output voltage V2 in the voltage difference adjustment process. Therefore, the voltage difference ΔV can be increased to the reference value Vref in the voltage difference adjustment process.

As described above, even in the third embodiment, the voltage difference ΔV can be increased to the reference value Vref by the voltage difference adjustment process. Therefore, in the subsequent periodic power transfer process, the boost converter operation and the buck converter operation can be suitably executed as in the first embodiment.

In the above-mentioned third embodiment, the voltage difference adjustment process, the periodic power transfer process, and the voltage difference decreasing process are executed while the batteries 11 and 12 are being charged by external charging equipment. However, these processes may be executed while the batteries 11 and 12 are not being charged. That is, these processes may be executed with the relay switches 85 and 86 OFF. In this case, the control circuit 90 may stop the DC-DC converter during the voltage difference adjustment process. That is, the lower battery 12 may be disconnected from the high potential line 31. Even in this state, by the electric power of the lower battery 12 being consumed by the electrical apparatus 92 in the voltage difference adjustment process, the voltage difference ΔV can be increased to the reference value Vref.

In the first to third embodiments, the upper battery 11 is an example of a first battery and the lower battery 12 is an example of a second battery.

### Fourth Embodiment

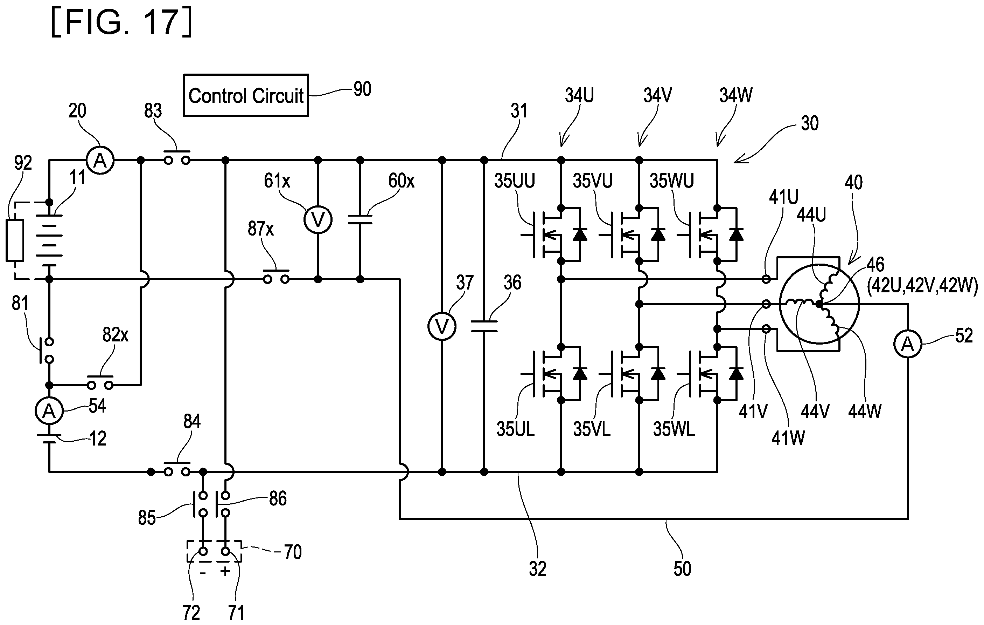

In an electric circuit of the fourth embodiment shown in FIG. 17, relay switches 82x and 87x, a capacitor 60x, and a voltmeter 61x are disposed instead of the relay switches 82 and 87, the capacitor 60, and the voltmeter 61 of the first embodiment. The other configurations of the electric circuit in the fourth embodiment are the same as those in the first embodiment. The relay switch 82x is disposed between the positive electrode of the upper battery 11 and the positive electrode of the lower battery 12. When the relay switch 82x is ON, the positive electrode of the upper battery 11 and the positive electrode of the lower battery 12 are connected to each other. The relay switch 87x is disposed between the negative electrode of the upper battery 11 and the neutral point line 50. When the relay switch 87x is ON, the negative electrode of the upper battery 11 is connected to the neutral point 46. The capacitor 60x is connected between the high potential line 31 and the neutral point line 50. The voltmeter 61x is connected between the high potential line 31 and the neutral point line 50. If the electric circuit of the fourth embodiment has an electrical apparatus 92 for power consumption, the electrical apparatus 92 is connected between the positive and negative electrodes of the upper battery 11.

In the fourth embodiment, when the relay switches 83 and 87x are ON, the upper battery 11 is connected between the high potential line 31 and the neutral point 46. In the fourth embodiment, when the relay switches 82x, 83, and 84 are ON, the lower battery 12 is connected between the high potential line 31 and the low potential line 32. When the control circuit 90 repeatedly switches the upper reverse-conducting switching elements in this state, electric power is transferred from the upper battery 11 to the lower battery 12 while boosting the voltage by the boost converter operation. When the control circuit 90 repeatedly switches the lower reverse-conducting switching elements, electric power is transferred from the lower battery 12 to the upper battery 11 while bucking the voltage by the buck converter operation. Thus, the voltage difference adjustment process, the periodic power transfer process, and the voltage difference decreasing process can be executed in the same manner as in the first to third embodiments.

In the fourth embodiment, the lower battery 12 is an example of a first battery and the upper battery 11 is an example of a second battery.

Specific examples of the present invention have been described in detail, however, these are mere exemplary indications and thus do not limit the scope of the claims. The art described in the claims includes modifications and variations of the specific examples presented above. Technical features described in the description and the drawings may technically be useful alone or in various combinations, and are not limited to the combinations as originally claimed. Further, the art described in the description and the drawings may concurrently achieve a plurality of aims, and technical significance thereof resides in achieving any one of such aims.

## Claims

1. An electric circuit mounted in a vehicle, the electric circuit comprising:
a first battery;
a second battery;
a three phase motor comprising three coils comprising a U-phase coil, a V-phase coil, and a W-phase coil, wherein each of the three coils has a first connection terminal disposed at one end thereof and a second connection terminal disposed at another end thereof and the three phase motor comprises a neutral point at which the second connection terminals of the three coils are connected to each other;
an inverter circuit connected to the first connection terminal of the U-phase coil, the first connection terminal of the V-phase coil, and the first connection terminal of the W-phase coil; and
a control circuit,
wherein the inverter circuit comprises:
a high potential line;
a low potential line; and
three series switch circuits respectively arranged for the three coils,
wherein each of the three series switch circuits comprises an upper reverse-conducting switching element and a lower reverse-conducting switching element, the upper reverse-conducting switching element being a reverse-conducting switching element connected between the first connection terminal of corresponding one of the three coils and the high potential line, and the lower reverse-conducting switching element being a reverse-conducting switching element connected between the first connection terminal of the corresponding one of the three coils and the low potential line,
wherein the control circuit is configured to execute a battery warming process,
wherein the battery warming process comprises:
a voltage difference adjustment process of adjusting a voltage difference obtained by subtracting an output voltage of the second battery from an output voltage of the first battery such that the voltage difference is equal to or greater than a reference value; and
a periodic power transfer process of causing a converter circuit to alternately and repeatedly execute a first power transfer process and a second power transfer process, wherein the converter circuit comprises a specific series switch circuit which is at least one of the three series switch circuits and a specific coil which is at least one of the three coils and corresponds to the specific series switch circuit, the converter circuit transfers electric power from the second battery to the first battery while boosting a voltage in the first power transfer process, and the converter circuit transfers electric power from the first battery to the second battery while bucking a voltage in the second power transfer process; and
in the periodic power transfer process, an amplitude of the voltage difference is smaller than the reference value.

2. The electric circuit according to claim 1, wherein, in the voltage difference adjustment process, the control circuit causes the converter circuit to execute the first power transfer process.

3. The electric circuit according to claim 1, wherein, in the voltage difference adjustment process, the control circuit charges the first battery by applying a supply voltage supplied by charging equipment external to the vehicle to the first battery, and charges the second battery by applying a voltage obtained by bucking the supply voltage using the converter circuit to the second battery.

4. The electric circuit according to claim 1, wherein, in the voltage difference adjustment process, the control circuit causes electric power of the second battery to be consumed.

5. The electric circuit according to any one of claims 1 to 4, wherein the control circuit executes the battery warming process while the first battery and the second battery are charged in parallel by charging equipment external to the vehicle.

6. The electric circuit according to any one of claims 1 to 4, wherein the control circuit executes a process of decreasing the voltage difference after execution of the periodic power transfer process.

7. The electric circuit according to any one of claims 1 to 4, wherein the control circuit executes the periodic power transfer process in a state in which a positive electrode of the first battery is connected to the high potential line, a negative electrode of the first battery is connected to the low potential line, a positive electrode of the second battery is connected to the neutral point, and a negative electrode of the second battery is connected to the low potential line.

8. The electric circuit according to any one of claims 1 to 4, wherein the control circuit executes the periodic power transfer process in a state in which a positive electrode of the first battery is connected to the high potential line, a negative electrode of the first battery is connected to the low potential line, a positive electrode of the second battery is connected to the high potential line, and a negative electrode of the second battery is connected to the neutral point.

9. A program configured to cause an electric circuit mounted in a vehicle to execute a battery warming process,
the electric circuit comprising:
a first battery;
a second battery;
a three phase motor comprising three coils comprising a U-phase coil, a V-phase coil, and a W-phase coil, wherein each of the three coils has a first connection terminal disposed at one end thereof and a second connection terminal disposed at another end thereof, and the three phase motor comprises a neutral point at which the second connection terminals of the three coils are connected to each other;
an inverter circuit connected to the first connection terminal of the U-phase coil, the first connection terminal of the V-phase coil, and the first connection terminal of the W-phase coil; and
a control circuit,
wherein the inverter circuit comprises:
a high potential line;
a low potential line; and
three series switch circuits respectively arranged for the three coils,
wherein each of the three series switch circuits comprises an upper reverse-conducting switching element and a lower reverse-conducting switching element, the upper reverse-conducting switching element being a reverse-conducting switching element connected between the first connection terminal of corresponding one of the three coils and the high potential line, and the lower reverse-conducting switching element being a reverse-conducting switching element connected between the first connection terminal of the corresponding one of the three coils and the low potential line,
wherein the battery warming process comprises:
a voltage difference adjustment process of adjusting a voltage difference obtained by subtracting an output voltage of the second battery from an output voltage of the first battery such that the voltage difference is equal to or greater than a reference value; and
a periodic power transfer process of causing a converter circuit to alternately and repeatedly execute a first power transfer process and a second power transfer process, wherein the converter circuit comprises a specific series switch circuit which is at least one of the three series switch circuits and a specific coil which is at least one of the three coils and corresponds to the specific series switch circuit, the converter circuit transfers electric power from the second battery to the first battery while boosting a voltage in the first power transfer process, and the converter circuit transfers electric power from the first battery to the second battery while bucking a voltage in the second power transfer process; and
in the periodic power transfer process, an amplitude of the voltage difference is smaller than the reference value.
